# EUROPÄISCHE PATENTANMELDUNG

(11) **EP 1 267 029 A1**
(43) Veröffentlichungstag der Anmeldung: **18.12.2002**
(21) Anmeldenummer: 01112380.9
(22) Anmeldetag: 21.05.2001
(51) Int. Cl.: E06B 3/66

(54) **Isolierglasscheibe mit einem eine elektronische Schaltung aufnehmenden Abstandshalter**

(71) Anmelder: Schneider + Fichtel GmbH, 72108 Rottenburg a.N. (DE)
(72) Erfinder: Schneider, Rolf A.O., 72108 Rottenburg a.N. (DE)
(74) Vertreter: Dallmeyer, Georg, Dipl.-Ing.

(57) **Zusammenfassung**

Bei einer Isolierglasscheibe bestehend aus mindestens zwei im Abstand voneinander gehaltenen Glasscheiben (2,3,4,5) die über einen umlaufenden Abstandhalter (6) miteinander verbunden sind, und die einen nach außen abgedichteten Zwischenraum (10) zwischen den Glasscheiben aufweisen, ist vorgesehen, dass mindestens eine der Glasscheiben (2,3,4,5) eine Beschichtung mit mindestens zwei transparenten elektrisch leitenden Bahnen aufweist, dass die transparenten elektrisch leitenden Bahnen auf der Glasscheibe angeordnete elektrische oder elektronische Stromverbraucher mit Strom und/oder Steuersignalen versorgen, und dass der Abstandhalter (6) eine elektronische Schaltung (14) zur Steuerung der elektrischen oder elektronischen Stromverbraucher aufnimmt.

## Beschreibung

Die Erfindung betrifft eine Isolierglasscheibe mit mindestens zwei in Abstand voneinander angeordneten Glasscheiben, die über einen umlaufenden Abstandhalter miteinander verbunden sind.

Derartige Isolierglasscheiben dienen der Wärme- und/oder Schallisolation, wobei der Zwischenraum zwischen den Glasscheiben möglichst dampfdicht sein soll und bei verschiedenen Ausführungen mit einem neutralen Gas gefüllt ist.

Zwischen den Glasscheiben kann auch ein Überdruck oder ein Unterdruck bestehen.

Bekannte Abstandhalter bestehen aus einem umlaufenden Rahmen aus Kunststoff oder Metall. Es sind metallische Abstandhalter aus Aluminium und Edelstahl bekannt.

Die Abstandhalter können aus einem Hohlprofil bestehen, das zum Zwischenraum zwischen den Glasscheiben offen ist. Die Öffnungen zum Zwischenraum zwischen den Glasscheiben bestehen aus Löchern oder Schlitzen. Die Hohlprofile können ein Trockenmittel zum Absorbieren der Feuchtigkeit aus dem Zwischenraum enthalten. Ein derartiger Abstandhalter ist beispielsweise aus der EP-A-0 785 336 bekannt.

Der Erfindung liegt die Aufgabe zugrunde, eine Isolierglasscheibe zu schaffen, die elektrische oder elektronische Komponenten betreiben kann. Zur Lösung dieser Aufgabe dienen die Merkmale des Anspruchs 1.

Die Erfindung sieht in vorteilhafter Weise vor, dass mindestens eine der Glasscheiben eine Beschichtung mit mindestens zwei elektrisch leitenden transparenten Bahnen aufweist, dass die elektrisch leitenden transparenten Bahnen auf der Glasscheibe angeordnete elektrische oder elektronische Stromverbraucher mit Strom und/oder Steuersignale versorgen, und dass der Abstandhalter eine elektronische Schaltung zur Steuerung der elektrischen oder elektronischen Stromverbraucher aufnimmt. Eine derartige Isolierglasscheibe kann ohne Umbauarbeiten z.B. in herkömmliche Fensterrahmen eingebaut werden. Dadurch, dass die elektronische Schaltung in dem Abstandhalter integriert ist, wird beim Einbau der Isolierglasscheibe lediglich eine Stromversorgung benötigt. Ein weiterer Vorteil besteht darin, dass aufgrund der transparenten elektrisch leitenden Bahnen keine Stromversorgungsleitungen oder Steuersignalleitungen auf der Glasscheibe erkennbar sind und auch keine elektronischen oder elektrischen Schaltung sichtbar ist, so dass sich die Isolierglasscheibe von einer normalen Isolierglasscheibe nur durch die auf mindestens einer der Glasscheiben angeordnete sichtbaren Stromverbraucher von einer herkömmlichen Isolierglasscheibe unterscheidet. Dies ermöglicht eine Vielzahl von Gestaltungs- und Anwendungsmöglichkeiten für die erfindungsgemäße Isolierglasscheibe.

Vorzugsweise ist vorgesehen, dass die elektronische Schaltung in einem Hohlraum eines Abschnitts des Abstandhalters angeordnet ist. Die Anordnung der elektronischen Schaltung in einem Hohlraum des Abstandhalters oder anstelle des Abstandhalters ermöglicht, dass die elektronische Schaltung von außen nicht sichtbar ist. Desweiteren ist auch die Verkabelung der elektronischen Schaltung mit den elektrisch leitenden Bahnen nicht sichtbar. Schließlich gewährleistet die Anordnung der elektronischen Schaltung in dem Abstandhalter eine gute Zugänglichkeit für eine Stromversorgung.

Vorzugsweise ist vorgesehen, dass der umlaufende Abstandhalter aus mehreren Hohlprofilelementen besteht, die über Verbindungsteile miteinander koppelbar sind. Diese Verbindungsteile können in vorteilhafter Weise bei rechteckigen oder viereckigen Isolierglasscheiben an den Ecken vorgesehen sein. Die Verbindungsteile können für die Kabelzuführung und Stromversorgung der elektronischen Schaltung benutzt werden.

Die Hohlprofile können in an sich bekannter Weise Trockenmittel enthalten. Ausgenommen hiervon ist der Bereich, in dem die elektronische Schaltung angeordnet ist.

Auf der dem Zwischenraum zwischen den Glasscheiben abgewandten Seite des umlaufenden Abstandhalters ist eine Dichtungsmasse angeordnet, mit der der Zwischenraum zwischen den Glasscheiben dampfdicht verschlossen werden kann. Ein Stromversorgungskabel für die elektronische Schaltung kann durch das Dichtungsmittel hindurchgeführt sein, um die elektronische Schaltung mit Strom zu versorgen.

Die elektrisch leitenden Bahnen sind an dem Außenumfang der Glasscheibe mit einem an die elektronische Schaltung anschließbaren Kabel versehen. Dieses Anschlusskabel ist vorzugsweise an einem Bereich in der Nähe der elektronischen Schaltung herausgeführt. Besonders geeignet ist hierfür der Eckenbereich bei einer rechteckigen oder quadratischen Isolierglasscheibe.

Die Stromverbraucher auf der mit den transparenten elektrisch leitenden Bahnen versehenen Glasscheibe bestehen bei einem bevorzugten Ausführungsbeispiel aus LED-Dioden. Die LED-Dioden ermöglichen eine Beleuchtung der Isolierglasscheibe. Eine andere Anwendung besteht darin, aus den LED-Dioden eine Displayeinheit zu bilden, mit deren Hilfe Informationen angezeigt werden können.

Die elektronische Schaltung kann einen Dämmerungsschalter aufweisen. Mit Hilfe des Dämmungsschalters können die LED-Dioden in Abhängigkeit von einem vorbestimmten Helligkeitswert ein- oder ausgeschaltet werden.

Hierzu kann der umlaufende Abstandhalter mindestens eine in den Zwischenraum zwischen den Glasscheiben gerichteten Lichtsensor aufweisen, der ein Lichtintensitätssignal dem Dämmerungsschalter zuführt.

Bei einem Ausführungsbeispiel ist vorgesehen, dass die Glasscheibe in den Zwischenraum gerichtete LED-Dioden aufweist.

Bei einem anderen Ausführungsbeispiel ist vorgesehen, dass die Glasscheibe aus einer Verbundglasscheibe aus mindestens zwei Glasscheiben besteht, bei der die dem Zwischenraum zugewandte innere Scheibe die transparenten elektrisch leitenden Bahnen mit den elektrischen oder elektronischen Stromverbrauchern aufweist.

Bei einer derartigen Verbundglasscheibe kann die innere Scheibe die transparenten elektrisch leitenden Bahnen auf der dem Zwischenraum zugewandten Seite oder auf der dem Zwischenraum abgewandten Seite aufweisen.

Im Falle einer Verbundglasscheibe bei der die innere Scheibe die transparenten elektrisch leitenden Bahnen, auf der dem Zwischenraum abgewandten Seite aufweist, sind die Stromverbraucher zwischen den Scheiben der Verbundglasscheibe eingebettet.

Eine Verbindungsschicht zwischen den Glasscheiben der Verbundglasscheibe ist transparent oder transluzent und kann auch eingefärbt werden.

Die elektrischen oder elektronischen Verbraucher, die auf der stromführenden Glasscheibe angeordnet sind, können aus Steuerungs- und/oder Kommunikationseinrichtungen und/oder Displayeinrichtungen bestehen. So können auf der Glasscheibe auch unterschiedliche Sensoren angeordnet sein, wie beispielsweise Fingerabdrucksensoren oder Bildsensoren zur Video-Bildübertragung, akustische Wandler zur Tonübertragung oder Displayeinrichtungen zur Anzeige von Informationen oder Steuerungseinrichtungen, wie beispielsweise Tastaturfelder.

Im folgenden werden unter Bezugnahme auf die Zeichnungen Ausführungsbeispiele der Erfindung näher erläutert:

Es zeigen:
- Fig. 1: einen Teilbereich einer Isolierglasscheibe,
- Fig. 2: einen Schnitt entlang der Linie II-II in Fig. 1, und
- Fig. 3: ein zweites Ausführungsbeispiel einer Isolierglasscheibe mit einer Verbund-glasscheibe.

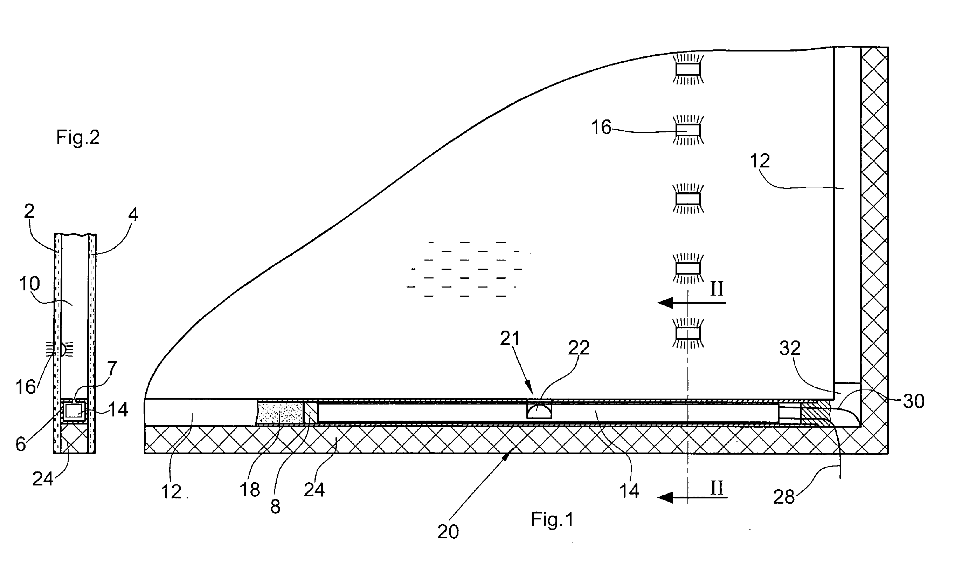

Fig. 1 zeigt einen Ausschnitt einer Isolierglasscheibe, bestehend aus zwei in Abstand voneinander gehaltenen Glasscheiben 2,4, die über einen umlaufenden Abstandhalter 6 miteinander verbunden sind und auf Abstand gehalten sind. Der Abstandhalter 6 kann aus einem Hohlprofil bestehen. In dem Ausführungsbeispielen der Fign. 1 bis 3 besteht der Abstandhalter 6 aus mehreren Hohlprofilelementen 12, die vorzugsweise an den Ecken mit Hilfe von Verbindungsteilen 32 miteinander verbunden sind. Diese Verbindungsteile 32 sind als Steckelemente gestaltet, die in den Hohlraum der Hohlprofilelemente 12 einsteckbar sind.

Die Hohlprofilelemente 12 weisen einen in den Zwischenraum 10 zwischen den Glasscheiben 2,4 gerichteten Schlitz 7 auf, der alternativ auch aus einer Lochreihe bestehen kann. Der Hohlraum der Hohlprofilelemente 12 kann mit einem Trockenmittel 18 gefüllt sein. Lediglich in einem Abschnitt 20 des Hohlprofilelementes 12, in dem sich eine elektronische Schaltung 14 befindet, wird keine Trockenmittel 18 eingefüllt. Der umlaufende Abstandhalter 6 verläuft mit Abstand von dem äußeren Rand der Glasscheiben 2,4, wie am besten aus Fig. 2 ersichtlich ist.

Auf der dem Zwischenraum 10 abgewandten Seite des umlaufenden Abstandhalters 6 ist eine Dichtungsmasse 24 ebenfalls umlaufend angeordnet, die bündig mit dem Außenrand der Glasscheiben 2,4 abschließt. Die Dichtungsmasse 24 stellt sicher, dass der Zwischenraum 10 nach außen hin abgedichtet ist. Der Zwischenraum 10 kann unter Vakuum stehen oder unter einem Überdruck oder kann auch mit einem speziellen Gas gefüllt sein.

Mindestens eine der Glasscheiben 2,4 ist mit einer Beschichtung mit mehreren transparenten elektrisch leitenden Bahnen versehen, die die Stromversorgung von auf den Glasscheiben 2,4 angeordneten elektrischen oder elektronischen Stromverbrauchern ermöglichen. Die Herstellung von ITO-Beschichtungen von Glasflächen ist in der WO 99/03111, auf die hiermit ausdrücklich Bezug genommen wird, ausführlicher beschrieben.

Bei der in den Fign. 1 und 2 gezeigten Isolierglasscheibe bestehen die elektrischen oder elektronischen Stromverbraucher aus LED-Dioden 16, die beispielsweise am rechten Rand der Glasscheibe 2 übereinander angeordnet sind. Die LED-Dioden 16 sind auf der Innenseite der Glasscheibe 2 angeordnet, auf der sich auch die transparenten elektrisch leitenden Bahnen befinden, die in den Zeichnungen nicht dargestellt sind. Die transparenten elektrisch leitenden Bahnen verlaufen bis zum Außenrand der Glasscheibe 2. Vorzugsweise im Eckbereich der Glasscheiben sind die elektrisch leitenden Bahnen an ein Kabel 30 angeschlossen, das zum Verbinden mit der elektronischen Schaltung 14 dient. Das Anschlusskabel 30 ist zur Vereinfachung als einfaches Kabel dargestellt, kann aber eine Vielzahl von Einzelleitungen enthalten. Alternativ besteht auch die Möglichkeit, die transparenten elektrisch leitenden Bahnen kabellos im Abschnitt 20 des Hohlprofilelementes 12 mit der elektronischen Schaltung zu verbinden. Hierzu könnte ein Hohlprofilelement 12 aus Kunststoff mit entsprechenden Außenkontakten versehen sein, die mit den elektrisch leitenden Bahnen auf der Glasscheibe kontaktieren.

Die elektronische Schaltung 14 ist in dem Abschnitt 14 eines Hohlprofilelementes 12 eingeführt und mit Hilfe eines Stopfens 8 gegenüber dem Trockenmittel 18 abgedichtet. Die Oberseite des Hohlprofilelementes 12 kann eine Bohrung 21 aufweisen, durch die ein Lichtsensor 22 Helligkeit in dem Zwischenraum 10 messen kann und ein Lichtintensitätssignal einem Dämmerungsschalter zuführen kann, der in der elektronischen Schaltung 14 enthalten ist. Eine weitere Möglichkeit besteht darin, die elektronische Schaltung 14 ggf. unter Einschluss eines Eckverbindungsteils 32 als einstückige Einheit in das Hohlprofilelement 12 anstelle des Abschnitts 20 einzusetzen.

Mit Hilfe des Lichtsensors 22 und dem Dämmerungsschalter kann die aus LED-Dioden 16 bestehende Beleuchtung der Isolierglasfläche in Abhängigkeit von der Helligkeit ein- und ausgeschaltet werden.

Die elektronische Schaltung 14 wird über ein Kabel 28 mit Strom versorgt, das durch das Verbindungsteil 32 und die Dichtungsmasse 24 hindurchgeführt ist. Für den Anschluss der transparenten elektrisch leitenden Bahnen an das Verbindungsteil 32 und für den Anschluss der Stromversorgung kann ein spezielles Verbindungsteil 32 als Steckverbindung vorbereitet sein.

Es versteht sich, dass die Anordnung der LED-Dioden 16 auch in anderer Weise erfolgen kann und dass diese LED-Dioden nicht nur zur Beleuchtung der Isolierglasscheibe verwendet werden können, sondern auch zur Informationsvermittlung, wobei über ein entsprechend angeordnetes LED-Feld Symbole, Zahlen oder Buchstaben angezeigt werden können. Beispielsweise wäre es möglich umfangreichere Informationen auch über Laufschrift anzuzeigen.

Da die transparenten elektrisch leitenden Bahnen die Übertragung von relativ hohen Stromstärken erlauben, können die elektrischen oder elektronischen Verbraucher auch aus Steuerungs- und/oder Kommunikationseinrichtungen und/oder Displayeinrichtungen bestehen. So können beispielsweise auch Sensoren, LCD-Displayeinheiten, Miniaturvideokameras oder akustische Wandler auf der Glasscheibe angeordnet sein und über die transparenten elektrisch leitenden Bahnen mit Strom und/oder Steuersignalen versorgt werden.

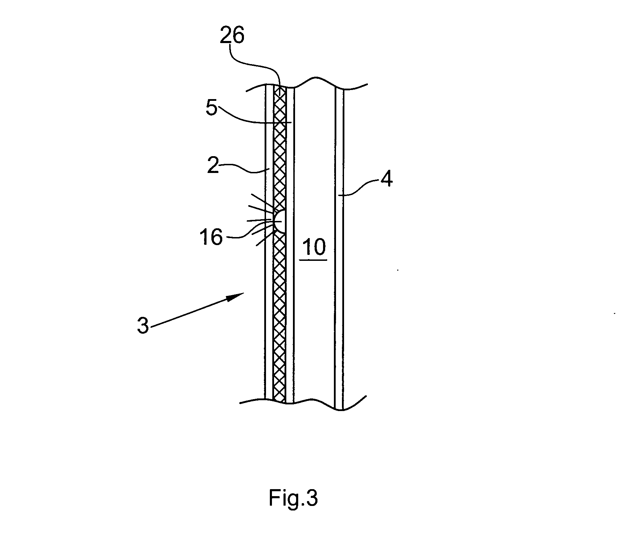

Fig. 3 zeigt ein Ausführungsbeispiel einer Isolierglasscheibe, bei der mindestens eine der Glasscheiben 2,4 aus einer Verbundglasscheibe 3 besteht.

Vorzugsweise ist die dem Zwischenraum 10 zugewandte innere Glasscheibe 5 mit den elektrisch leitenden transparenten Bahnen versehen. Das Ausführungsbeispiel zeigt eine innere Glasscheibe 5 der Verbundglasscheibe, bei der die transparenten elektrisch leitenden Bahnen auf der dem Zwischenraum 10 abgewandten Seite angeordnet sind. Entsprechend ist auch eine LED-Diode 16 auf der nach außen gerichteten Oberfläche der Glasscheibe 5 angeordnet und zwar in der Verbindungsschicht 26, mit der die Glasscheiben 2 und 5 zu einem Verbundglas miteinander verklebt sind. Die Verbindungsschicht 26 kann aus einem Gießharz oder einer Folie bestehen.

Die Verbindungsschicht 26 kann transparent oder transluzent gestaltet sein. Desweiteren besteht die Möglichkeit, die Verbindungsschicht 26 einzufärben.

## Patentansprüche

1. Isolierglasscheibe bestehend aus mindestens zwei im Abstand voneinander gehaltenen Glasscheiben (2,3,4,5) die über einen umlaufenden Abstandhalter (6) miteinander verbunden sind, und die einen nach außen abgedichteten Zwischenraum (10) zwischen den Glasscheiben aufweisen,
**dadurch gekennzeichnet,**
**dass** mindestens eine der Glasscheiben (2,3,4,5) eine Beschichtung mit mindestens zwei transparenten elektrisch leitenden Bahnen aufweist,
**dass** die transparenten elektrisch leitenden Bahnen auf der Glasscheibe angeordnete elektrische oder elektronische Stromverbraucher mit Strom und/oder Steuersignalen versorgen, und
**dass** der Abstandhalter (6) eine elektronische Schaltung (14) zur Steuerung der elektrischen oder elektronischen Stromverbraucher aufnimmt.

2. Isolierglasscheibe nach Anspruch 1, **dadurch gekennzeichnet, dass** die elektronische Schaltung (14) in einem Hohlraum eines Abschnitts (20) des Abstandhalters (6) oder anstelle eines Abschnitts (20) des Abstandhalters (6) angeordnet ist.

3. Isolierglasscheibe nach einem der Ansprüche 1 oder 2, **dadurch gekennzeichnet, dass** der umlaufende Abstandhalter (6) aus mehreren Hohlprofilelementen (12) besteht, die über Verbindungsteile (32) miteinander verbunden sind.

4. Isolierglasscheibe nach Anspruch 3, **dadurch gekennzeichnet, dass** das Stromversorgungskabel (28) über ein Verbindungsteil (32) der elektronischen Schaltung (14) zuführbar ist.

5. Isolierglasscheibe nach Anspruch 3 oder 4, **dadurch gekennzeichnet, dass** die Hohlprofilelemente (12) ein Trockenmittel (18) enthalten.

6. Isolierglasscheibe nach einem der Ansprüche 1 bis 5, **dadurch gekennzeichnet, dass** auf der dem Zwischenraum (10) abgewandten Seite des umlaufenden Abstandhalters (6) eine Dichtungsmasse (24) angeordnet ist.

7. Isolierglasscheibe nach Anspruch 6, **dadurch gekennzeichnet, dass** ein Stromversorgungskabel (28) für die elektronische Schaltung (14) durch das Dichtungsmittel (24) hindurchgeführt ist.

8. Isolierglasscheibe nach einem der Ansprüche 1 bis 7, **dadurch gekennzeichnet, dass** die elektrisch leitenden Bahnen der Glasscheibe (2;3) an dem Außenumfang der Glasscheibe mit einem an die elektronische Schaltung (14) anschließbaren Kabel (30) versehen sind.

9. Isolierglasscheibe nach einem der Ansprüche 1 bis 8, **dadurch gekennzeichnet, dass** eine der Glasscheiben aus einer Verbundglasscheibe (3) aus mindestens zwei Glasscheiben (2,5) besteht, bei der die dem Zwischenraum (10) zugewandte innere Scheibe die transparenten elektrisch leitenden Bahnen mit dem elektrischen oder elektronischen Stromverbraucher aufweist.

10. Isolierglasscheibe nach Anspruch 9, **dadurch gekennzeichnet, dass** die innere Scheibe (5) die transparenten elektrisch leitenden Bahnen auf der dem Zwischenraum (10) zugewandten oder abgewandten Seite aufweist.

11. Isolierglasscheibe nach einem der Ansprüche 9 oder 10, **dadurch gekennzeichnet, dass** die Verbundglasscheibe (3) zwischen den Glasscheiben eine einfärbbare transparente oder transluzente Verbindungsschicht (26) aufweist.

12. Isolierglasscheibe nach einem der Ansprüche 1 bis 11, **dadurch gekennzeichnet, dass** die elektrischen oder elektronischen Stromverbraucher aus LED-Dioden bestehen.

13. Isolierglasscheibe nach einem der Ansprüche 1 bis 12, **dadurch gekennzeichnet, dass** die elektronische Schaltung (14) einen Dämmerungsschalter aufweist.

14. Isolierglasscheibe nach Anspruch 13, **dadurch gekennzeichnet, dass** der umlaufende Abstandhalter (6) mindestens einen in den Zwischenraum (10) zwischen den Glasscheiben (2;3,4) gerichteten Lichtsensor (22) aufweist, der ein Lichtintensitätssignal dem Dämmerungsschalter zuführt.

15. Isolierglasscheibe nach einem der Ansprüche 10 bis 12, **dadurch gekennzeichnet, dass** die Glasscheibe (2) in den Zwischenraum (10) gerichtete LED-Dioden (16) aufweist.

16. Isolierglasscheibe nach einem der Ansprüche 1 bis 11, **dadurch gekennzeichnet, dass** die elektrischen oder elektronischen Verbraucher aus Steuerungsund/oder Kommunikationseinrichtungen und/oder Displayeinrichtungen bestehen.
